# EUROPEAN PATENT SPECIFICATION

(11) **EP 3 143 796 B1**
(45) Date of publication and mention of the grant of the patent: **01.07.2020**
(21) Application number: 15793639.4
(22) Date of filing: 12.05.2015
(51) Int. Cl.: H04W 28/02, H04W 36/22, H04W 28/08, H04W 88/06

(54) **APPARATUS, SYSTEM AND METHOD OF OFFLOADING TRAFFIC AT A USER EQUIPMENT (UE) BASED ON A MOBILITY STATE OF A WLAN ACCESS POINT**
VORRICHTUNG, SYSTEM UND VERFAHREN ZUM ENTLADEN VON VERKEHR AN EINER BENUTZERAUSRÜSTUNG BASIEREND AUF EINEM MOBILITÄTSSTATUS EINES WLAN-ZUGANGSPUNKTS
APPAREIL, SYSTÈME ET PROCÉDÉ DE DÉCHARGEMENT DE TRAFIC AU NIVEAU D'UN ÉQUIPEMENT UTILISATEUR (UE) REPOSANT SUR UN ÉTAT DE MOBILITÉ D'UN POINT D'ACCÈS DE RÉSEAU LOCAL SANS FIL

(30) Priority: 13.05.2014 US 201461992706 P
(43) Date of publication of application: 22.03.2017
(73) Proprietor: Intel IP Corporation, Santa Clara, CA 95054 (US)
(72) Inventor: SIROTKIN, Alexander, 90901 Giv'on Hachadasha (IL); FONG, Mo-Han, Sunnyvale, California 94089 (US); HIMAYAT, Nageen, Fremont, California 94539 (US); BURBIDGE, Richard C., Shrivenham Oxfordshire SN6 8HR (GB)
(74) Representative: Goddar, Heinz J.
(86) International application number: PCT/US2015/030278
(87) International publication number: WO 2015/175468

(56) References cited:
- WO-A1-2013/025168
- WO-A1-2013/025168
- WO-A1-2013/144548
- WO-A1-2015/043683
- US-A1- 2013 198 817
- US-A1- 2014 045 491
- US-A1- 2014 064 068
- NEW POSTCOM: "Considerations on requirements and scenarios of WLAN/3GPP Radio", 3GPP DRAFT; R2-130270_CONSIDERATIONS ON REQUIREMENTS AND SCENARIOS OF WLAN AND 3GPP RADIO INTERWORKING, 3RD GENERATION PARTNERSHIP PROJECT (3GPP), MOBILE COMPETENCE CENTRE ; 650, ROUTE DES LUCIOLES ; , vol. RAN WG2, no. St. Julian; 20130128 - 20130201 19 January 2013 (2013-01-19), XP050668305, Retrieved from the Internet: URL:http://www.3gpp.org/ftp/tsg_ran/WG2_RL 2/TSGR2_81/Docs/ [retrieved on 2013-01-19]
- CHINA UNICOM: "Disucussion on Mobile AP scenarios", 3GPP DRAFT; R2-131030 DISCUSSION ON MOBILE AP SCENARIOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago; 20130415 - 20130419 5 April 2013 (2013-04-05), XP050699213, Retrieved from the Internet: URL:http://www.3gpp.org/ftp/tsg_ran/WG2_RL 2/TSGR2_81bis/Docs/ [retrieved on 2013-04-05]
- NAN CHENG ET AL: "Vehicular WiFi offloading: Challenges and solutions", VEHICULAR COMMUNICATIONS, vol. 1, no. 1, 1 January 2014 (2014-01-01) , pages 13-21, XP055237591, ISSN: 2214-2096, DOI: 10.1016/j.vehcom.2013.11.002
- IERA A ET AL: "End-to-end QoS provisioning in 4G with mobile hotspots", IEEE NETWORK, IEEE SERVICE CENTER, NEW YORK, NY, US, vol. 19, no. 5, 1 September 2005 (2005-09-01), pages 26-34, XP011139502, ISSN: 0890-8044, DOI: 10.1109/MNET.2005.1509949
- NAN CHENG ET AL.: 'Vehicular WiFi offloading: Challenges and solutions' VEHICULAR COMMUNICATIONS, [Online] vol. 1, no. ISSUE, January 2014, pages 13 - 21, XP055237591 Retrieved from the Internet: <URL:http://www.sciencedirect.com/ science /article/pii/S221420961300003X#>

## Description

### TECHNICAL FIELD

Some embodiments described herein generally relate to offloading traffic at a User Equipment (UE) based on a mobility state of a Wireless Local Area Network (WLAN) Access Point (AP).

WO 2013/025168 A1 shows a user equipment, UE, that determines a mobility state of a Wi-Fi access point, AP, as one of a moving mobility state and a non-moving mobility state along with control information relating to UE cell (re-)selection and/or handover behavior based on the determined mobility state of the Wi-Fi access point, AP. The UE then controls its cell (re-)selection and/or handover behavior in relation to the Wi-Fi access point, AP based on the determined control information. The UE can communicate with a cellular base station, BS, and with the Wi-Fi access point, AP. The UE detects the Wi-Fi AP, determines that the Wi-Fi AP is moving based on a moving AP indication, and controls cell (re- Selection and/or handover behavior of the UE based on the determination that the Wi-Fi AP is moving along with other information.

WO 2015/043683 A1, this prior art under Article 54(3) EPC, relates to a method in a wireless terminal operating in a 3GPP wireless communications network for controlling interworking with a Wireless Local Area Network, WLAN. The method comprises receiving system information comprising a parameter defining a condition for interworking with a WLAN network associated with mobility characteristics of the wireless terminal and determining a parameter indicative of mobility characteristics of the wireless terminal. The wireless terminal disables interworking with a WLAN network if the parameter indicative of mobility characteristics does not meet the condition.

### SUMMARY

The invention is defined by the subject matter of the independent claims. Advantageous embodiments are subject of the dependent claims..

### BACKGROUND

A wireless communication device, e.g., a mobile device, may be configured to utilize multiple wireless communication technologies.

For example, a User Equipment (UE) device may be configured to utilize a cellular connection, e.g., a Long Term Evolution (LTE) cellular connection, as well as a wireless-local-area-network (WLAN) connection, e.g., a Wireless-Fidelity (WiFi) connection.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative embodiments.
Fig. 2 is a schematic flow-chart illustration of a method of offloading traffic at a User Equipment (UE), in accordance with some demonstrative embodiments.
Fig. 3 is a schematic illustration of a product, in accordance with some demonstrative embodiments.

### DETAILED DESCRIPTION

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one embodiment," "an embodiment," "demonstrative embodiment," "various embodiments," etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

Some embodiments may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a Smartphone device, an Internet of Things (IoT) device, a sensor device, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wireless node, a base station (BS), a wired or wireless router, a wired or wireless modem, a video device, an audio device, an audio-video (A/V) device, a wired or wireless network, a wireless area network, a cellular network, a cellular node, a cellular device, a Wireless Local Area Network (WLAN), a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, vending machines, sell terminals, and the like.

Some embodiments may be used in conjunction with devices and/or networks operating in accordance with existing Long Term Evolution (LTE) specifications (including 3GPP TS 36.300 (3GPP TS 36.300 VI1.7.0 (2013-09); Technical Specification; 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11))*;* 3GPP 25.300 (3GPP TS 25.300 V0.1.0 (2014-02); Technical Specification; 3rd Generation Partnership Project; Technical Specification Group Radio Access Network; UTRAN: General Description; Stage 2 (Release 12)); 3GPP TS 25.304 (3GPP TS 25.304 V12.1.0 (2014-03); Technical Specification; 3rd Generation Partnership Project; Technical Specification Group Radio Access Network; User Equipment (UE) procedures in idle mode and procedures for cell reselection in connected mode (Release 12)*);* 3GPP TS 36.304 (3GPP TS 36.304 V12.0.0 (2014-03); Technical Specification; 3rd Generation Partnership Project; Technical Specification Group Radio Access Network; Evolved Universal Terrestrial Radio Access (E-UTRA); User Equipment (UE) procedures in idle mode (Release 12)*);* 3GPP TS 25.331 (3GPP TS 25.331 V11.7.0 (2013-09); Technical Specification; 3rd Generation Partnership Project; Technical Specification Group Radio Access Network; Radio Resource Control (RRC); Protocol specification (Release 11)*);* and/or 3GPP TS 36.331 (3GPP TS 36.331 V11.5.0 (2013-09); Technical Specification; 3rd Generation Partnership Project; Technical Specification Group Radio Access Network; Evolved Universal Terrestrial Radio Access (E-UTRA); Radio Resource Control (RRC); Protocol specification (Release 11)*)),* and/or future versions and/or derivatives thereof, devices and/or networks operating in accordance with existing IEEE 802.16 standards (IEEE-Std 802.16, 2009 Edition, Air Interface for Fixed Broadband Wireless Access Systems*;* IEEE-Std 802.16e, 2005 Edition, Physical and Medium Access Control Layers for Combined Fixed and Mobile Operation in Licensed Bands*; amendment to IEEE Std 802.16-2009, developed by Task Group m)* and/or future versions and/or derivatives thereof, units and/or devices which are part of the above networks, and the like.

Some embodiments may be used in conjunction with one or more types of wireless communication signals and/or systems, for example, Radio Frequency (RF), Frequency-Division Multiplexing (FDM), Orthogonal FDM (OFDM), Single Carrier Frequency Division Multiple Access (SC-FDMA), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth®, Global Positioning System (GPS), Wireless Fidelity (Wi-Fi), Wi-Max, ZigBee™, Ultra-Wideband (UWB), Global System for Mobile communication (GSM), second generation (2G), 2.5G, 3G, 3.5G, 4G, 4.5G, Fifth Generation (5G) mobile networks, 3GPP, Long Term Evolution (LTE) cellular system, LTE advance cellular system, LTE Unlicensed systems, High-Speed Downlink Packet Access (HSDPA), High-Speed Uplink Packet Access (HSUPA), High-Speed Packet Access (HSPA), HSPA+, Single Carrier Radio Transmission Technology (1XRTT), Evolution-Data Optimized (EV-DO), Enhanced Data rates for GSM Evolution (EDGE), and the like. Other embodiments may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative embodiments, a wireless device may be or may include a peripheral that is integrated with a computer, or a peripheral that is attached to a computer. In some demonstrative embodiments, the term "wireless device" may optionally include a wireless service.

The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit. The verb "communicating" may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device.

Some demonstrative embodiments are described herein with respect to a LTE network. However, other embodiments may be implemented in any other suitable cellular network or system, e.g., a Universal Mobile Telecommunications System (UMTS) cellular system, a GSM network, a 3G cellular network, a 4G cellular network, a 4.5G network, a 5G cellular network, a WiMAX cellular network, and the like.

Some demonstrative embodiments are described herein with respect to a WLAN system. However, other embodiments may be implemented in any other suitable non-cellular network.

Some demonstrative embodiments may be used in conjunction with a Heterogeneous Network (HetNet), which may utilize a deployment of a mix of technologies, frequencies, cell sizes and/or network architectures, e.g., including cellular, mmWave, and/or the like. In one example, the HetNet may include a radio access network having layers of different-sized cells ranging from large macrocells to small cells, for example, picocells and femtocells. Other embodiments may be used in conjunction with any other suitable wireless communication network.

The term "antenna", as used herein, may include any suitable configuration, structure and/or arrangement of one or more antenna elements, components, units, assemblies and/or arrays. In some embodiments, the antenna may implement transmit and receive functionalities using separate transmit and receive antenna elements. In some embodiments, the antenna may implement transmit and receive functionalities using common and/or integrated transmit/receive elements. The antenna may include, for example, a phased array antenna, a single element antenna, a dipole antenna, a set of switched beam antennas, and/or the like.

The term "cell", as used herein, may include a combination of network resources, for example, downlink and optionally uplink resources. The resources may be controlled and/or allocated, for example, by a cellular node (also referred to as a "base station"), or the like. The linking between a carrier frequency of the downlink resources and a carrier frequency of the uplink resources may be indicated in system information transmitted on the downlink resources.

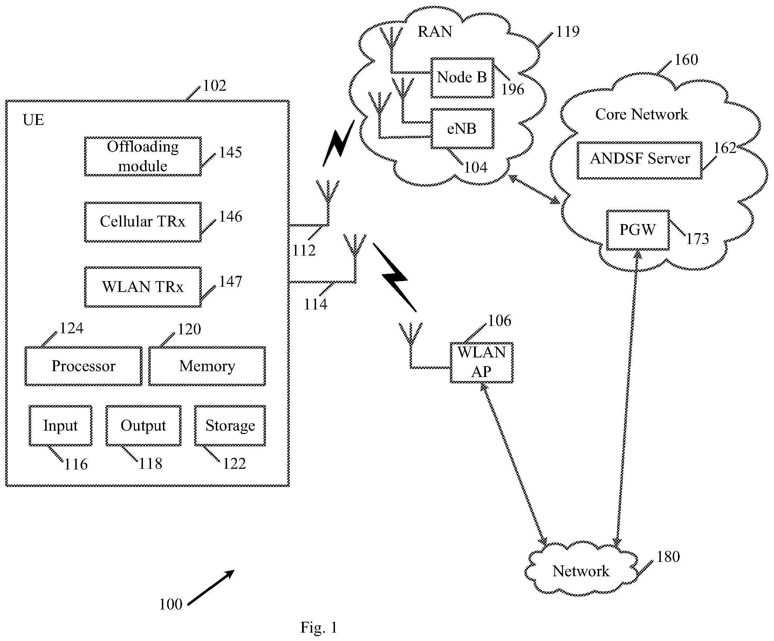

Reference is now made to Fig. 1, which schematically illustrates a block diagram of a system 100, in accordance with some demonstrative embodiments.

As shown in Fig. 1, in some demonstrative embodiments, system 100 may include one or more wireless communication devices capable of communicating content, data, information and/or signals via one or more wireless mediums, for example, a radio channel, a cellular channel, an RF channel, a Wireless Fidelity (WiFi) channel, an IR channel, and the like, e.g., as described below. One or more elements of system 100 may optionally be capable of communicating over any suitable wired communication links.

In some demonstrative embodiments, system 100 may include at least one User Equipment (UE) 102 capable of communicating with one or more wired networks 180 via at least one Radio Access Network (RAN) 119, and/or via at least one non-cellular network, e.g., as described below.

In some demonstrative embodiments, UE 102 may include, for example, a mobile computer, a MD, a STA, a laptop computer, a notebook computer, a tablet computer, an Ultrabook™ computer, a mobile internet device, a handheld computer, a handheld device, a storage device, a PDA device, a handheld PDA device, an Internet of Things (IoT) device, a sensor device, an on-board device, an off-board device, a hybrid device (e.g., combining cellular phone functionalities with PDA device functionalities), a consumer device, a vehicular device, a non-vehicular device, a mobile or portable device, a mobile phone, a cellular telephone, a PCS device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a video device, an audio device, an A/V device, a gaming device, a media player, a Smartphone, or the like.

In some demonstrative embodiments, networks 180 may include one or more Packet Data Networks (PDNs). For example, networks 180 may include an Internet network, an IP Multimedia Core Network Subsystem (IMS) network, and/or any other PDN. In other embodiments, networks 180 may include any other suitable additional and/or alternative network.

In some demonstrative embodiments, RAN 119 may include one or more cells controlled by one or more cellular nodes ("nodes"). For example, RAN 119 may include an evolved Node B (eNB) 104, a Node B 196, and/or any other cellular node, e.g., a Base Station (BS), a Base Transceiver Station (BTS), and the like.

In some demonstrative embodiments, eNB 104 may be configured to perform radio resource management (RRM), radio bearer control, radio admission control (access control), connection mobility management, resource scheduling between UEs and eNB radios, e.g., Dynamic allocation of resources to UEs in both uplink and downlink, header compression, link encryption of user data streams, packet routing of user data towards a destination, e.g., another eNB or an Evolved Packet Core (EPC), scheduling and/or transmitting paging messages, e.g., incoming calls and/or connection requests, broadcast information coordination, measurement reporting, and/or any other operations.

In some demonstrative embodiments, system 100 may include a non-cellular network, for example, a WLAN, e.g., a Basic Service Set (BSS), managed by a WLAN Access Point (AP) 106.

In some demonstrative embodiments, the non-cellular network may at least partially be within a coverage area of a cellular network of RAN 119. For example, AP 106 may be within a coverage area of eNB 104.

In some demonstrative embodiments, system 100 may also include a Core Network (CN or CNW) 160, which may be configured to provide one or more services to UE 102, and/or to setup and/or manage communication between UE 102 and RAN 119 and/or networks 180, e.g., as described below.

In some demonstrative embodiments, CN 160 may include one or more PDN Gateways (PGWs) 173 to support a PDN connection between UE 102 and a PDN of network 180.

In some demonstrative embodiments, core network 160 may include an Access Network Discovery and Selection Function (ANDSF) server 162, which may be configured to assist UE 102 in communicating with and/or steering between one or more steering traffic between Radio Access Technology (RAT) networks, for example, RAN 119 and/or WLAN AP 106, e.g., as described below.

In some demonstrative embodiments, UE 102, eNB 104, WLAN AP 106, and/or Node B 196 may include one or more wireless communication units to perform wireless communication between UE 102, RAN 119, AP 106 and/or with one or more other wireless communication devices, e.g., as described below.

In some demonstrative embodiments, UE 102 may include a cellular Transceiver (TRx) 146 to communicate with a cellular network of RAN 119, and a WLAN TRx 147 to communicate with WLAN AP 106.

In some demonstrative embodiments, cellular TRx 146 and/or WLAN TRx 147 may include, or may be associated with, one or more antennas. In one example, UE 102 may include at least two antennas, e.g., antennas 112 and 114, or any other number of antennas, e.g., one antenna or more than two antennas.

In some demonstrative embodiments, antennas 112, and/or 114 may include any type of antennas suitable for transmitting and/or receiving wireless communication signals, blocks, frames, transmission streams, packets, messages and/or data. For example, antennas 112 and/or 114 may include any suitable configuration, structure and/or arrangement of one or more antenna elements, components, units, assemblies and/or arrays. For example, antennas 112 and/or 114 may include a phased array antenna, a dipole antenna, a single element antenna, a set of switched beam antennas, and/or the like.

In some embodiments, antennas 112 and/or 114 may implement transmit and receive functionalities using separate transmit and receive antenna elements. In some embodiments, antennas 112 and/or 114 may implement transmit and receive functionalities using common and/or integrated transmit/receive elements.

In some demonstrative embodiments, cellular TRx 146 and/or WLAN TRx 147 may include one or more radios, wireless transmitters, receivers and/or transceivers including circuitry and/or logic able to send and/or receive wireless communication signals, RF signals, frames, blocks, transmission streams, packets, messages, data items, and/or data.

In some demonstrative embodiments, WLAN TRx 147 may be configured to communicate with AP 106 over a WLAN link, and cellular transceiver 146 may be configured to communicate with a cellular network of RAN 119 over a cellular link.

In some demonstrative embodiments, the WLAN link may include, for example, a Wireless Fidelity (WiFi) link, a Wireless Gigabit (WiGig) link, or any other link. In some demonstrative embodiments, the WLAN link may include, for example, a link over the 2.4 Gigahertz (GHz) or 5GHz frequency band, the 60 GHz frequency band, and/or any other frequency band.

In some demonstrative embodiments, cellular TRx 146 may include a multiple input multiple output (MIMO) transmitters receivers system (not shown) including circuitry and/or logic, which may be capable of performing antenna beamforming methods, if desired. In other embodiments, cellular TRx 146 may include any other transmitters and/or receivers.

In some demonstrative embodiments, cellular TRx 146 may include a turbo decoder and/or a turbo encoder (not shown) including circuitry and/or logic for encoding and/or decoding data bits into data symbols, if desired. In other embodiments, cellular TRx 146 may include any other encoder and/or decoder.

In some demonstrative embodiments, cellular TRx 146 may include OFDM and/or SC-FDMA modulators and/or demodulators (not shown) including circuitry and/or logic configured to communicate OFDM signals over downlink channels, e.g., between RAN 119 and UE 102, and SC-FDMA signals over uplink channels, e.g., between UE 102 and RAN 119. In other embodiments, cellular TRx 146 may include any other modulators and/or demodulators.

In some demonstrative embodiments, WLAN TRx 147 may establish a WLAN link with AP 106. For example, WLAN TRx 147 may perform the functionality of one or more STAs, e.g., one or more WiFi STAs, WLAN STAs, and/or millimeter Wave (mmWave) STAs. The WLAN link may include an uplink and/or a downlink. The WLAN downlink may include, for example, a unidirectional link from AP 106 to the one or more STAs. The uplink may include, for example, a unidirectional link from a STA to AP 106.

In some demonstrative embodiments, UE 102 may be configured to utilize a cellular connection, e.g., a Long Term Evolution (LTE) cellular connection, a Universal Mobile Telecommunications System (UMTS) connection or any other cellular connection, to communicate with a cellular network of RAN 119, and/or a WLAN connection, e.g., a Wireless-Fidelity (WiFi) connection or any other WLAN connection, to communicate with WLAN AP 106.

In some demonstrative embodiments, cellular TRx 146 may utilize the cellular link between UE 102 and RAN 119 to communicate traffic of one or more PDN connections, e.g., via one or more PGWs 173.

In some demonstrative embodiments, UE 102 may establish one or more bearers, e.g., one or more Evolved Packet-switched System (EPS) bearers, via the one or more PDN connections between UE 102 and one or more PGWs 173.

In some demonstrative embodiments, one or more elements of system 100 may perform the functionality of a HetNet, which may utilize a deployment of a mix of technologies, frequencies, cell sizes and/or network architectures, for example, including cellular, WLAN, and/or the like.

For example, the HetNet may be configured to provide a service through a first wireless communication environment, e.g., a cellular network, and to maintain the service when switching to another communication environment, e.g., WLAN. The HetNet architecture may enable utilizing a mixture of wireless communication environments, e.g., a WLAN environment and a cellular environment, for example, to optimally respond to rapid changes in customer demand, reduce power consumption, reduce cost, increase efficiency and/or achieve any other benefit.

In one example, system 100 may utilize a Multi-tier, Multi-Radio Access Technology (Multi-RAT) Het-Net architecture, including a tier of small cells, e.g., pico, femto, relay stations, WiFi APs, and the like, overlaid on top of a macro cellular deployment to augment network capacity.

In another example, system 100 may utilize Multi-RAT small cells integrating multiple radios such as WiFi and 3GPP air interfaces in a single infrastructure device.

In other embodiments, system 100 may implement any other architecture and/or deployment.

In some demonstrative embodiments, UE 102, eNB 104, Node B 196, and/or WLAN AP 106 may be configured to enable selective access network selection and/or traffic steering of traffic between UE 102 and the WLAN or the cellular network, for example, based on one or more criteria and/or parameters, e.g., as described in detail below.

In some demonstrative embodiments, UE 102, node 104 and/or AP 106 may be configured to facilitate a UE-centric (also referred to as "UE controlled") access network selection and/or traffic steering scheme, in which UE 102 may select an access network to be utilized by UE 102 and/or to steer traffic of UE 102 between the WLAN and the cellular network.

In some demonstrative embodiments, one or more elements of RAN 119 and/or CN 160 may provide to UE 102 one or more values of one or more parameters ("UE assistance parameter", also referred to as the "access network selection and traffic steering parameter" or "traffic steering parameter"), and/or UE 102 may be provided with one or more rules ("UE assistance rules", also referred to as the "access network selection and traffic steering rules" or "traffic steering rules"), which may be used by the UE 102 as part of a traffic steering decision, e.g., as described in detail below.

In some demonstrative embodiments, UE 102 may include an offloading module 145 configured to route traffic of UE 102 between a cellular network of RAN 119 and WLAN AP 106, e.g., as described below.

In some demonstrative embodiments, offloading module 145 may include, or may be implemented using, suitable circuitry and/or logic, e.g., controller circuitry and/or logic, processor circuitry and/or logic, memory circuitry and/or logic, and/or any other circuitry and/or logic, which may be configured to perform at least part of the functionality of offloading module 145. Additionally or alternatively, one or more functionalities of controller 145 may be implemented by logic, which may be executed by a machine and/or one or more processors, e.g., as described below. In one example, offloading module 145 may include one or more processors having circuitry and/or logic to cause UE 102 to perform one or more traffic routing and/or steering operations, communications and/or functionalities, e.g., as described herein.

In some demonstrative embodiments, offloading module 145 may be configured to control access network selection, e.g., to select between RAN 119 and WLAN AP 106, and/or traffic steering, e.g., to steer and/or route traffic of UE 102 between RAN 119 and/or WLAN AP 106, for example, based on the one or more access network selection and traffic steering rules and/or access network selection and traffic steering parameters.

In some demonstrative embodiments, the one or more access network selection and traffic steering rules and/or, access network selection and traffic steering parameters may include rules and/or parameters for steering traffic of UE 102 between WLAN and 3GPP networks, e.g., in accordance with 3GPP Specifications, e.g., 3GPP TS 36.304 and/or 3GPP TS 25.304, and/or any other specification and/or protocol.

In some demonstrative embodiments, one or more of the access network selection and traffic steering rules may take into account a mobility state of UE 102 ("UE mobility state"), which may be configured to represent and/or approximate a speed of UE 102. In one example, the mobility state of UE 102 may be selected from a plurality of predefined mobility states, for example, a normal mobility state, a medium mobility state, and a high mobility state. In other embodiments, the UE mobility state may be selected from any other additional or alternative mobility states.

In some demonstrative embodiments, one or more parameters of the access network selection and traffic steering rules may be set and/or adjusted based on the UE mobility state of UE 102.

In one example, one or more of the access network selection and traffic steering rules may take into account the UE mobility state of UE 102, for example, by scaling a time-to-trigger timer, for example, a *Tsteering_{WLAN}* timer, based on the UE mobility state of UE 102. For example, an operator may reduce the likelihood, e.g., to make it very unlikely, for UE 102 to steer traffic to a WLAN network, e.g., when UE 102 is in high mobility state, for example, by setting the *Tsteering_{WLAN}* timer to a longer period. For example, when UE 102 is at the high mobility state, it may be beneficial to direct UE 102 to use the 3GPP network, which may typically have much better coverage, e.g., compared to WLAN.

In some demonstrative embodiments, in some scenarios it may be advantageous to steer traffic of UE 102 to the WLAN, for example, even if UE 102 is at a medium or high mobility state. Accordingly, a mechanism, which is configured to direct UE 102 to the RAN 119, e.g., whenever the mobility state of UE 102 is high, may not be suitable for these scenarios.

In some demonstrative embodiments, it may not be advantageous to direct UE 102 to the RAN 119, e.g., when the mobility state of UE 102 is high, for example, when UE 102 is in the coverage area of a mobile WLAN AP.

For example, mobile WLAN APs may be deployed on transportation vehicles, for example, buses, trains, and the like. In these cases, even though UE 102 may be at the high mobility state, a mobile WLAN AP, e.g., WLAN AP 106, which may be located on the same transportation vehicle as UE 102, may be able to provide UE 102 with improved connectivity and/or services, e.g., compared to RAN 119.

In some demonstrative embodiments, offloading module 145 may be configured to determine a mobility of WLAN AP 106, and to route traffic of UE 102 between a cellular network of RAN 119 and the WLAN AP 106, for example, based at least on the mobility of the WLAN AP 106, and a mobility state of UE 102, e.g., as described below.

In some demonstrative embodiments, offloading module 145 may be configured to determine whether or not WLAN AP 106 is mobile, and to select whether or not to steer traffic to the WLAN, for example, based at least on whether or not the WLAN AP 106 is mobile, e.g., as described below.

In some demonstrative embodiments, UE 102 may also include, for example, one or more of a processor 124, an input unit 116, an output unit 118, a memory unit 120, and a storage unit 122. UE 102 may optionally include other suitable hardware components and/or software components. In some demonstrative embodiments, some or all of the components of UE 102 may be enclosed in a common housing or packaging, and may be interconnected or operably associated using one or more wired or wireless links.

Processor 124 includes, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 124 executes instructions, for example, of an Operating System (OS) of UE 102 and/or of one or more suitable applications.

Input unit 116 includes, for example, a keyboard, a keypad, a mouse, a touch-screen, a touch-pad, a track-ball, a stylus, a microphone, or other suitable pointing device or input device. Output unit 118 includes, for example, a monitor, a screen, a touch-screen, a flat panel display, a Liquid Crystal Display (LCD) display unit, a plasma display unit, one or more audio speakers or earphones, or other suitable output devices.

Memory unit 120 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 122 includes, for example, a hard disk drive, a floppy disk drive, a Compact Disk (CD) drive, a CD-ROM drive, a DVD drive, or other suitable removable or non-removable storage units. Memory unit 120 and/or storage unit 122, for example, may store data processed by UE 102.

In some demonstrative embodiments, offloading module 145 may be configured to determine the mobility of WLAN AP 106, for example, based on a mobility state of UE 102.

In some demonstrative embodiments, offloading module 145 may be configured to determine the mobility of WLAN AP 106, for example, when UE 102 is not at a static or normal mobility state, for example, when UE 102 is at a medium mobility state or a high mobility state.

In some demonstrative embodiments, offloading module 145 may be configured to determine that WLAN AP 106 is mobile, for example, if an identifier of WLAN AP 106 is detected by UE 102 for a predefined period, when the UE 102 is at a medium mobility state or a high mobility state.

In some demonstrative embodiments, the identifier of WLAN AP 106 may include a Basic Service Set Identifier (BSSID), or any other identifier.

In some demonstrative embodiments, the time used by the UE 102 to detect the mobility of WLAN AP 106 may be implementation specific or preconfigured.

In some demonstrative embodiments, the time used by the UE 102 to detect the mobility of WLAN AP 106 may be signaled by a 3GPP network, e.g., via eNB 104 and/or node B 196.

In some demonstrative embodiments, UE 102 may receive an indication of the predefined period from the cellular network, e.g., via RAN 119. According to these embodiments, an operator of the cellular network may be able to enable/disable mobile AP detection, e.g., thereby providing better control for the operator over the UE 102.

In some demonstrative embodiments, offloading module 145 may perform mobile AP detection, e.g., to determine a mobility of WLAN AP 106, for example, based on WLAN identifiers, e.g. BSSID, which may be available to offloading module 145, e.g., WLAN identifiers which may be received by UE 102 from WLAN AP 106.

For example, offloading module 145 may perform mobile AP detection, e.g., to determine a mobility of WLAN AP 106, for example, based on WLAN identifiers, e.g. in addition to one or more WLAN metrics or if WLAN metrics, e.g., Received Signal Strength Indicator (RSSI) and/or any other metric, are not available, as described below.

According to this example, if the UE 102 is at the medium or high mobility state, and UE 102 detects the same WLAN BSSID for a certain period of time, then offloading module 145 may determine that the detected WLAN BSSID belongs to a mobile AP.

In some demonstrative embodiments, offloading module 145 may be configured to determine the mobility of the WLAN AP 106 based on one or more WLAN metrics, e.g., WLAN signal strength metrics, corresponding to the WLAN AP 106, for example, when the UE 102 is at a medium mobility state or a high mobility state.

In some demonstrative embodiments, offloading module 145 may be configured to determine the WLAN AP 106 is mobile, for example, if a change of the one or more WLAN metrics during a predefined period is less than a predefined threshold.

In some demonstrative embodiments, one or more WLAN metrics corresponding to WLAN AP 106 may be available to UE 102.

In some demonstrative embodiments, the WLAN metrics may include one or more WLAN signal strength metrics, e.g., RSSI, and/or any other metric, which may, for example, be related to a distance between UE 102 and WLAN AP 106 and/or a placement, position, and/or movement of UE 102 relative to WLAN AP 106.

In some demonstrative embodiments, UE 102 may use the one or more WLAN metrics, for example, in conjunction with BSSID detection, to improve, for example, the accuracy of mobile WLAN AP detection.

In some demonstrative embodiments, offloading module 145 may be configured to detect WLAN AP 106 is mobile, for example, when WLAN measurements indicate that UE 102 is not moving fast, or is stationary, relative to WLAN AP 106, e.g., even though the UE 102 may be mobile relative to the cellular network.

For example, offloading module 145 may be configured to detect WLAN AP 106 is mobile, for example, when WLAN signal strength measurements are constant and/or vary within a predefined range and/or limits.

In one example, offloading module 145 may be configured to detect WLAN AP 106 is mobile, for example, if UE 102 is at the medium or high mobility state, and the WLAN signal strength, e.g. RSSI, of the same BSSID of WLAN AP 106, e.g., as measured by the UE 102, is stable or varies within a certain range constant.

Some demonstrative embodiments are described herein with respect to detecting a mobile WLAN AP, e.g., WLAN AP 106, when UE is at a medium or high mobility state. However, in other embodiments a mobile WLAN AP may be detected with respect to any other additional or alternative mobility state of UE 102 and/or any other parameter, state or information indicative of a movement and/or speed of UE 102.

In some demonstrative embodiments, one or more identifiers, e.g., BSSIDs or any other identifiers, of one or more mobile WLAN APs, e.g., including WLAN AP 106, may be preconfigured at UE 102 and/or signaled to UE 102, e.g., as described below.

In some demonstrative embodiments, offloading module 145 may be configured to determine the mobility of WLAN AP 106 based, for example, on a comparison between an identifier of the WLAN AP 106 and a list of mobile AP identifiers.

In some demonstrative embodiments, the list of mobile AP identifiers may be pre-provisioned in the UE 102.

In some demonstrative embodiments, UE 102 may be configured to receive one or more of the mobile AP identifiers from an operator of the cellular network, a cellular node of the cellular network, e.g., eNB 104 or Node B 196, and/or ANDSF server 162.

In some demonstrative embodiments, identifiers of one or more mobile APs may be provided to UE 102, for example, in the form of a "mobile AP list". According to these embodiments, when a WLAN AP, which has an identifier included in the "mobile AP list", is detected by UE 102, offloading module 145 may determine that the detected WLAN AP is mobile.

In some demonstrative embodiments, one or more identifiers of the "mobile AP list" may be pre-provisioned in UE 102, one or more identifiers of the "mobile AP list" may be configured via an Open Mobile Alliance Device Management (OMA-DM) mechanism, one or more identifiers of the "mobile AP list" may be configured by ANDSF server 162, and/or one or more identifiers of the "mobile AP list" may be signaled by the cellular network, e.g. vie eNB 104 using Radio Resource Control (RRC) signaling.

In one example, one or more identifiers of the mobile AP list may be communicated, for example, as part of a System Information Block (SIB) 17, or any other SIB or RRC message, for example, as part of a *"mobibleWlan-Id-List-r12"* element, e.g., as follows:

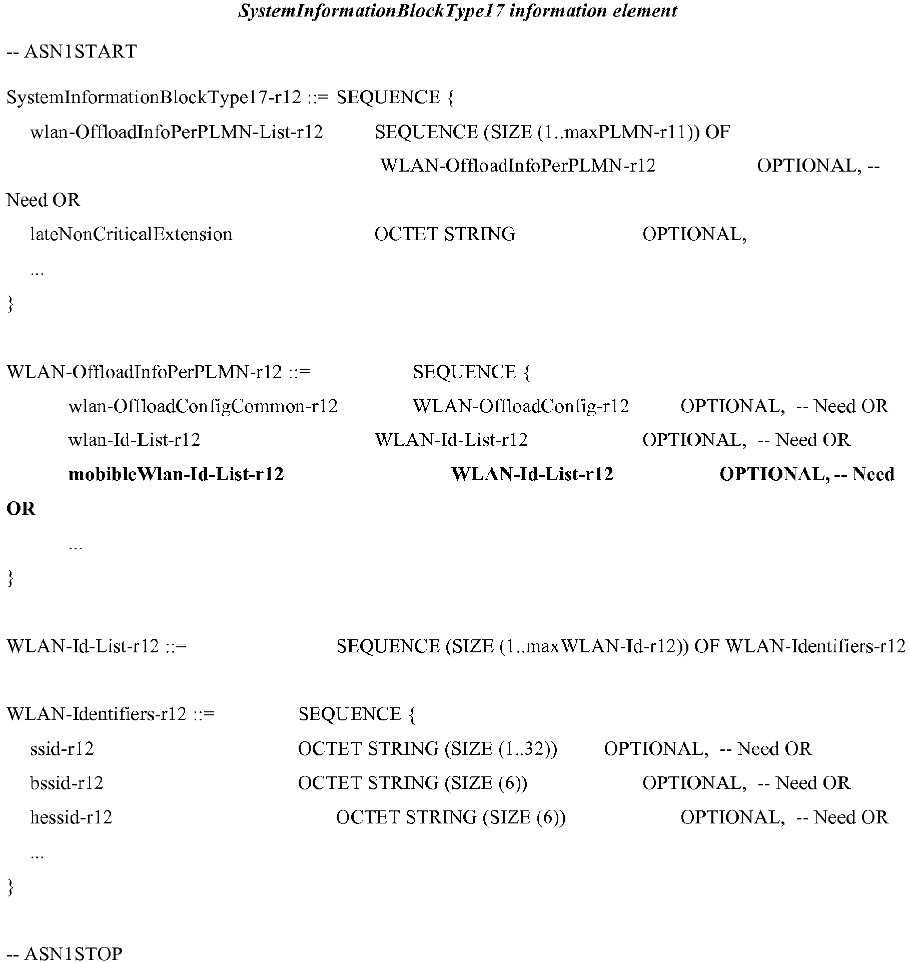

In some demonstrative embodiments, offloading module 145 may be configured to use the "mobile AP list" to detect a mobility of a WLAN AP, e.g., in addition to or instead of a WLAN identifier of a detected WLAN AP and/or the WLAN metrics of a detected WLAN AP, e.g., as described above.

In some demonstrative embodiments, offloading module 145 may be configured to select between accessing RAN 119 and a WLAN, and/or to select whether or not to steer traffic of the UE 102 to the WLAN, for example, based at least on whether or not a detected WLAN AP, e.g., the WLAN AP 106, is mobile, e.g., as described below.

In some demonstrative embodiments, offloading module 145 may use one or more first access network selection and traffic steering rules to perform access network selection and/or traffic steering with respect to a detected WLAN AP, which is not mobile. Offloading module 145 may use one or more one or more second access network selection and traffic steering rules, which may be different from the one or more first access network selection and traffic steering rules, e.g., to perform access network selection and/or traffic steering with respect to a detected WLAN AP, which is mobile, e.g., as described below.

In some demonstrative embodiments, offloading module 145 may be configured to, once a WLAN mobile AP is detected, cause UE 102 to follow one or more access network selection and traffic steering rules, e.g., between 3GPP and WLAN networks, which may be different from one or more access network selection and traffic steering rules defined for a case wherein the detected WLAN AP is not mobile ("normal case").

In some demonstrative embodiments, when offloading module 145 determines the WLAN AP is mobile and the UE is at a medium mobility state or a high mobility state, offloading module 145 may select to route the traffic between the cellular network of RAN 119 and WLAN AP 106, based one or more access network selection and traffic steering rules using only WLAN metrics, e.g., as described below.

In some demonstrative embodiments, offloading module 145 may be configured to use only traffic steering rules corresponding to one or more WLAN parameters, e.g., while excluding traffic steering rules which may be based one or more cellular parameters, to decide whether to route traffic to RAN 119 or to the WLAN, for example, when WLAN AP 106 is determined to be mobile, e.g., when UE 102 is at the medium mobility state or the high mobility state.

In some demonstrative embodiments, the one or more WLAN parameters may include, for example, a BSS load threshold, a WAN metrics threshold, and/or the like. The one or more cellular parameters may include, for example, one or more 3GPP parameters, e.g., one or more Reference Signal Received Power (RSRP) thresholds, one or more Reference Signal Received Quality (RSRQ) thresholds, and/or the like.

In some demonstrative embodiments, when detecting a mobile WLAN AP, offloading module 145 may be configured to use sets of 3GPP RAN and/or WLAN thresholds, e.g., both 3GPP and WLAN thresholds, which may be different, for example, from sets of 3GPP RAN and/or WLAN thresholds, which may be used in a "normal" case, e.g., in a non-mobile WLAN AP case.

In some demonstrative embodiments, offloading module 145 may be configured to route the traffic between the cellular network of RAN 119 and the WLAN AP 106, based on one or more access network selection and traffic steering rules, e.g., as described above.

In some demonstrative embodiments, offloading module 145 may be configured to evaluate the access network selection and traffic steering rules using one or more first assistance thresholds corresponding to one or more assistance parameters, for example, if offloading module 145 determines the WLAN AP 106 is mobile and UE 102 is at a medium mobility state or the high mobility state.

In some demonstrative embodiments, offloading module 145 may be configured to evaluate the access network selection and traffic steering rules using one or more second assistance thresholds corresponding to the one or more assistance parameters, e.g., including assistance thresholds different from the first assistance thresholds, for example, if offloading module 145 determines the WLAN AP 106 is non-mobile.

In some demonstrative embodiments, the one or more assistance parameters may include at least one WLAN threshold, and/or at least one cellular threshold.

In some demonstrative embodiments, an assistance threshold of the one or more second assistance thresholds, which corresponds to an assistance parameter of the one or more assistance parameters, may be higher than a first assistance threshold of one or more first assistance thresholds, which corresponds to the assistance parameter.

In some demonstrative embodiments, UE 102 may receive the one or more first assistance thresholds and/or the one or more second assistance thresholds from the cellular network. For example, cellular transceiver 146 may process reception of the one or more first assistance thresholds and/or the one or more second assistance thresholds, e.g., from the cellular network of RAN 119.

In one example, one or more of the first and/or second assistance thresholds may be communicated, for example, as part of a System Information Block (SIB) 17, or any other SIB or RRC message, for example, as part of a *"wlan-OffloadConfigCommonMobile-r12"* element, e.g., as follows:

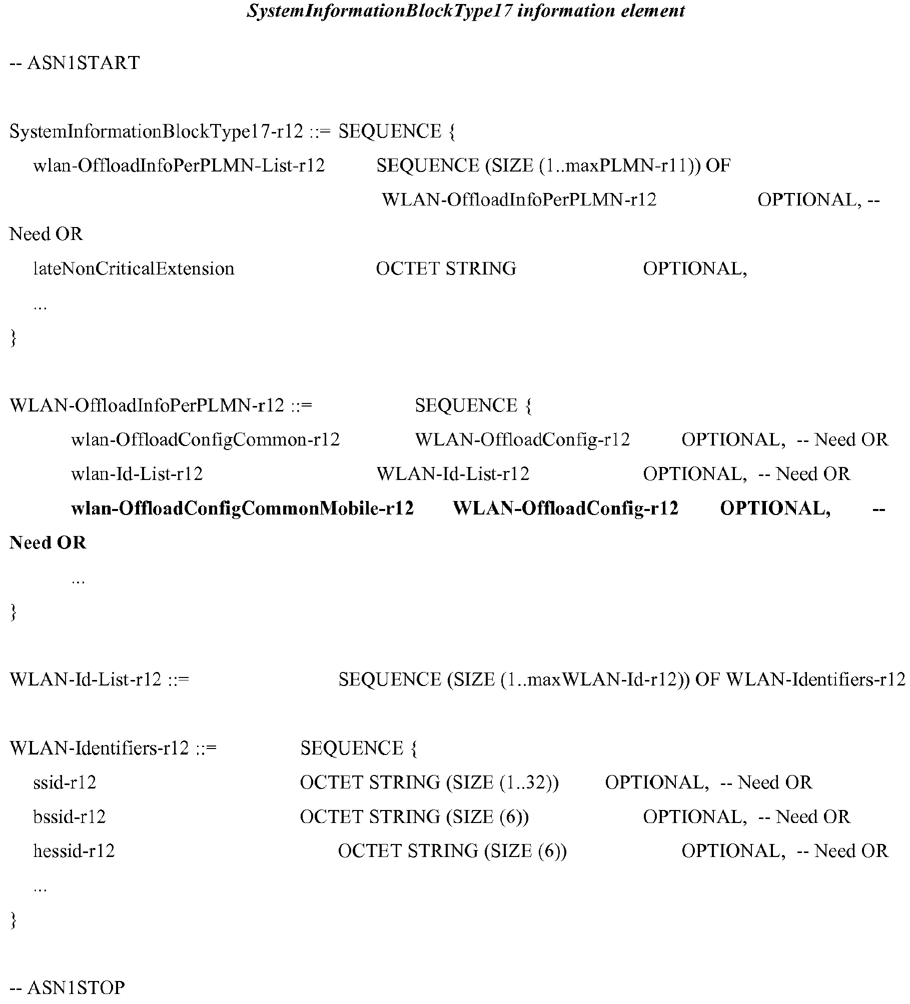

In some demonstrative embodiments, when the WLAN AP is detected to be mobile, UE 102 may be configured to use at least one timer setting, which may be different from a timer setting when the WLAN AP is not mobile, e.g., as described below.

In some demonstrative embodiments, UE 102 may be configured to use a first *Tsteering_{WLAN}* timer and/or to scale the *Tsteering_{WLAN}* timer with a first scaling factor, for example, in a "normal" case, e.g., with respect to a non-mobile WLAN AP.

In some demonstrative embodiments, UE 102 may be configured to use a second *Tsteering_{WLAN}* timer, which may be different from first *Tsteering_{WLAN}* timer, and/or to scale the *Tsteering_{WLAN}* timer with a second scaling factor, which may be different from the first scaling factor, for example, with respect to a mobile WLAN AP.

In some demonstrative embodiments, offloading module 145 may be configured to route the traffic between the cellular network of RAN 119 and the WLAN AP 106, based on fulfillment of one or more access network selection and traffic steering rules during a steering timer period, for example, according to the *Tsteering_{WLAN}* timer.

In some demonstrative embodiments, offloading module 145 may be configured to set the steering timer period to a first period, for example, if offloading module 145 determines the WLAN AP 106 is mobile and the UE 102 is at the medium mobility state or the high mobility state.

In some demonstrative embodiments, offloading module 145 may be configured to set the steering timer period to a second period, different from the first steering timer period, for example, if offloading module 145 determines the WLAN AP 106 is non-mobile and the UE is at the medium mobility state or the high mobility state.

In some demonstrative embodiments, the second period may be, for example, shorter than the first period.

In some demonstrative embodiments, offloading module 145 may be configured, for example, to control traffic steering between a WLAN and a cellular network, e.g., an LTE cellular network or a UMTS network, for example, using one or more of the following network access selection and traffic steering rules:
*The access stratum shall indicate to the upper layers when and for which WLAN identifiers (out of the list in RAN parameters in section 5.x.3) the following conditions 1 and 2 for steering traffic from E-UTRAN to WLAN are satisfied for a time interval Tsteering_{WLAN}:*
*1. In the E-UTRAN serving cell:*
   *Qrxlevmeas* < *Thresh_{ServingOffloadWLAN, LowP}; or*
   *Qqualmeas* < *Thresh_{ServingOffloadWLAN, Low};*
*2. In the target WLAN:*
   *ChannelUtilizationWLAN* < *Thresh_{ChUtilWLAN, Low}; and*
   *BackhaulRateDlWLAN* > *Thresh_{BackhRateDLWLAN}, _{High}; and*
   *BackhaulRateUlWLAN* > *Thresh_{BackhRateULWLAN}, _{High};*
   *The UE shall exclude the evaluation of a measurement for which a threshold has not been provided.*
*NOTE: If more than one WLAN provided by E-UTRAN meets the conditions above, then it is up to UE implementation to choose one of these WLANs. It is FFS whether E-UTRAN provides a priority for the WLAN identifiers.*
*The access stratum shall indicate to the upper layers when the following conditions 1 or 2 for steering traffic from WLAN to E-UTRAN are satisfied for a time interval Tsteering_{WLAN}:*
*1. In the selected source WLAN:*
   *ChannelUtilizationWLAN* > *Thresh_{ChUtilWLAN, High}; or*
   *BackhaulRateDlWLAN* < *Thresh_{BackhRateDLWLAN}, _{Low}; or*
   *BackhaulRateUlWLAN* < *Thresh_{BackhRateULWLAN}, _{Low};*
*2. In the target E-UTRAN cell:*
   *Qrxlevmeas* > *Thresh_{ServingOffloadWLAN}, _{HighP}; and*
   *Qqualmeas* > *Thresh_{servingOffloadWLAN}, _{HighQ};*
*The UE shall exclude the evaluation of a measurement for which a threshold has not been provided*

In some demonstrative embodiments, offloading module 145 may be configured, for example, to use any other additional or alternative rules to control traffic steering between the WLAN and the cellular network.

In some demonstrative embodiments, according to a first traffic steering scheme, when UE 102 is detected to be at the medium or high mobility state and a detected WLAN network belongs to a mobile AP, e.g., WLAN AP 106, offloading module 145 may exclude the evaluation of the network access selection and traffic steering rules based on cellular metrics, e.g., the LTE metrics RSRP and RSRQ from the rules listed above).

According to these embodiments, offloading module 145 may make traffic steering decisions to and/or from the WLAN, for example, based on the WLAN metrics alone. For example, if the WLAN BSS load of the detected WLAN, e.g., WLAN AP 106, is below a threshold, then offloading module 145 may decide to steer traffic to the detected WLAN, e.g., WLAN AP 106. Offloading module 145 may decide to steer traffic of UE 102 to the cellular network of RAN 119, e.g., to the LTE, for example, if the WLAN BSS load is higher that the threshold.

In some demonstrative embodiments, according to a second traffic steering scheme, when UE 102 is detected to be at the medium or high mobility state and a detected WLAN network belongs to a mobile AP, e.g., WLAN AP 106, offloading module 145 may select to apply one or more sets of thresholds ("mobile AP thresholds"), e.g. *Thresh_{ServingOffloadWLAN}, _{LowP},* and the like, which may be different from thresholds, which may be used in the "normal" case, e.g., when the WLAN belongs to a static AP.

In some demonstrative embodiments, the mobile AP thresholds may be provided to UE 102, for example, by an operator of the cellular network. For example, the mobile AP thresholds may be set, for example, such that the probability of steering the traffic of UE 102 to the WLAN when the WLAN AP is mobile is higher, e.g., compared to the probability of steering the traffic of UE 102 to the WLAN, when the WLAN AP is non-mobile.

In one example, one or more of the RSRP/RSRQ thresholds, below which UE must steer traffic to WLAN, which may be used for the mobile WLAN AP, may be increased with respect to the RSRP/RSRQ thresholds, which may be used for the non-mobile WLAN AP.

In another example, one or more of the WLAN utilization thresholds, which may be used to steer traffic to WLAN, when the WLAN AP is mobile, may be higher than the WLAN utilization thresholds, when the WLAN AP is non-mobile.

In some demonstrative embodiments, one or more of the mobile AP thresholds may be signaled to UE 102 by the cellular network, e.g., via RAN 119. In other embodiments, one or more of the mobile AP thresholds may be preset at a constant offset, e.g., with respect to "normal" thresholds, which may be used with respect to non-mobile APs.

In one example, one or more of the mobile AP thresholds may be communicated, for example, as part of a System Information Block (SIB) 17, or any other SIB or RRC message, for example, as part of a *"wlan-OffloadConfigCommonMobile-r12"* element, e.g., as described above.

In some demonstrative embodiments, according to a third traffic steering scheme, when UE 102 is detected to be at the medium or high mobility state and a detected WLAN network belongs to a mobile AP, e.g., WLAN AP 106, offloading module 145 may set a timer, e.g., the *Tsteering_{WLAN}* timer, differently from the timer used for a non-mobile WLAN AP.

For example, when UE 102 is detected to be at the medium or high mobility state and a detected WLAN network belongs to a mobile AP, offloading module 145 may not scale the *Tsteering_{WLAN}* timer at all, or may scale the *Tsteering_{WLAN}* timer different from the scaling of the timer when a non-mobile WLAN AP is detected.

In one example, offloading module may be configured to use a first *Tsteering_{WLAN}* timer, when UE 102 is at the medium mobility state or the high mobility state and the WLAN AP is non-mobile. Offloading module 145 may be configured to use a second *Tsteering_{WLAN}* timer, e.g., shorter than the first *Tsteering_{WLAN}* timer, for example, when UE 102 is at the medium mobility state or the high mobility state, and the WLAN AP is mobile. This setting may be in contrast to a "normal" *Tsteering_{WLAN}* timer, which may be longer, for example, when the UE 102 is at high mobility state.

In some demonstrative embodiments, offloading module 145 may be configured to implement the third traffic steering scheme alone or in combination with the first traffic steering scheme or the second traffic steering scheme.

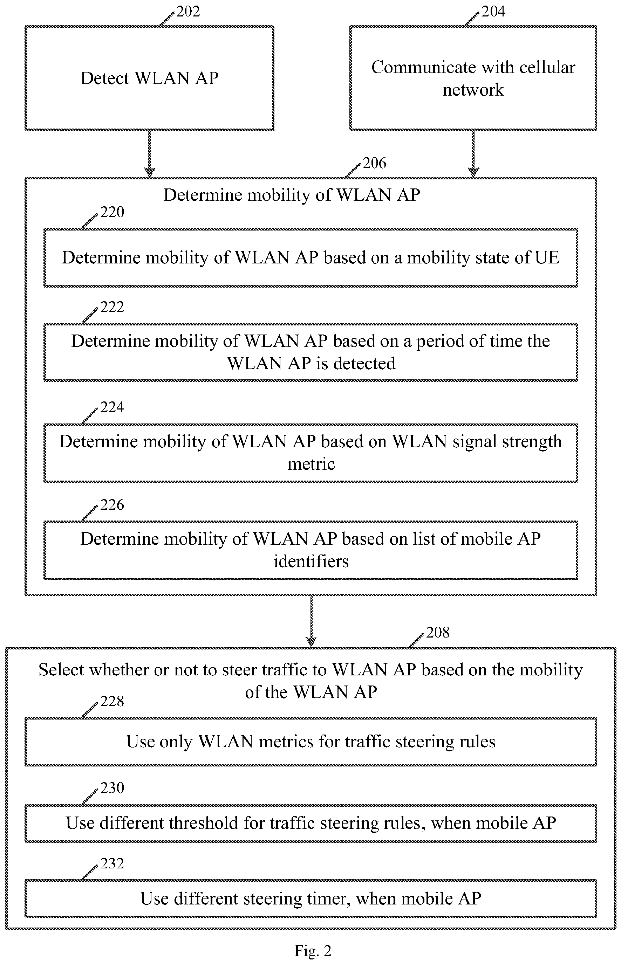

Fig. 2 is a schematic flow-chart illustration of a method of offloading traffic at a UE, in accordance with some demonstrative embodiments. In some embodiments, one or more of the operations of the method of Fig. 2 may be performed by a wireless communication system e.g., system 100 (Fig. 1); a UE, e.g., UE 102 (Fig. 1); and/or an offloading module, e.g., offloading module 145 (Fig. 1).

As indicated at block 202, the method may include communicating with a cellular network. For example, UE 102 (Fig. 1) may communicate with a cellular network of RAN 119 (Fig. 1), e.g., as described above.

As indicated at block 204, the method may include detecting a WLAN AP. For example, UE 102 (Fig. 1) may detect WLAN AP 106 (Fig. 1), e.g., as described above.

As indicated at block 206, the method may include determining a mobility of the WLAN AP. For example, offloading module 145 (Fig. 1) may determine the mobility of WLAN AP 106 (Fig. 1), e.g., as described above.

As indicated at block 220, the method may include determining the mobility of the WLAN AP, for example, based on the mobility state of the UE. For example, offloading module 145 (Fig. 1) may determine the mobility of WLAN AP 106 (Fig. 1) based on the mobility of UE 102 (Fig. 1). In one example, offloading module 145 (Fig. 1) may determine the mobility of WLAN AP 106 (Fig. 1), when UE 102 (Fig. 1) is at a medium or high mobility state, e.g., as described above.

As indicated at block 222, the method may include determining the mobility of the WLAN AP based on a period of time during which the WLAN AP is detected, e.g., continuously. For example, offloading module 145 (Fig. 1) may determine the WLAN AP 106 (Fig. 1) is mobile, if an identifier of the WLAN AP 106 (Fig. 1) is detected by UE 102 (Fig. 1) for a predefined period, e.g., when UE 102 (Fig. 1) is at a medium mobility state or a high mobility state, e.g., as described above.

As indicated at block 224, the method may include determining the mobility of the WLAN AP based on at least one WLAN signal strength metric. For example, offloading module 145 (Fig. 1) may determine the mobility of WLAN AP 106 (Fig. 1) based on one or more WLAN signal strength metrics corresponding to the WLAN AP 106 (Fig. 1), for example, when UE 102 (Fig. 1) is at a medium mobility state or a high mobility state, e.g., as described above.

As indicated at block 226, the method may include determining the mobility of the WLAN AP based on a list of mobile AP identifiers. For example, offloading module 145 (Fig. 1) may determine the mobility of WLAN AP 106 (Fig. 1) based on a comparison between an identifier of WLAN AP 106 (Fig. 1) and a list of mobile AP identifiers, e.g., as described above.

As indicated at block 208, the method may include selecting whether or not to steer traffic to the WLAN AP based on the mobility of the WLAN AP. For example, offloading module 145 (Fig. 1) may route traffic between the cellular network and WLAN AP 106 (Fig. 1), based at least on the mobility of WLAN AP 106 (Fig. 1) and a mobility state of the UE 102, (Fig. 1), e.g., as described above.

As indicated at block 228, the method may include using only WLAN metrics for traffic steering rules. For example, if offloading module 145 (Fig. 1) determines WLAN AP 106 (Fig. 1) is mobile and UE 102 (Fig. 1) is at a medium mobility state or a high mobility state, offloading module 145 (Fig. 1) may route the traffic between the cellular network and WLAN AP 106 (Fig. 1), for example, based on one or more access network selection and traffic steering rules using only WLAN metrics, e.g., as described above.

As indicated at block 230, the method may include using for one or more traffic steering rules one or more thresholds, which are different from thresholds for a non-mobile AP. For example, offloading module 145 (Fig. 1) may evaluate one or more access network selection and traffic steering rules using one or more first assistance thresholds corresponding to one or more assistance parameters, if offloading module 145 (Fig. 1) determines that WLAN AP 106 (Fig. 1) is mobile and UE 102 (Fig. 1) is at a medium mobility state or a high mobility state; and offloading module 145 (Fig. 1) may evaluate the access network selection and traffic steering rules using one or more second assistance thresholds corresponding to the one or more assistance parameters, different from the first assistance thresholds, if the offloading module determines WLAN AP 106 (Fig. 1) is non-mobile, e.g., as described above.

As indicated at block 232, the method may include using for one or more traffic steering rules a steering timer, which is different from a steering timer for a non-mobile AP. For example, offloading module 145 (Fig. 1) may set a steering timer period to a first period, for example, if offloading module 145 (Fig. 1) determines WLAN AP 106 (Fig, 1) is mobile and UE 102 (Fig. 1) is at a medium mobility state or a high mobility state; and offloading module 145 (Fig. 1) may set the steering timer period to a second period, different from the first steering timer period, for example, if offloading module 145 (Fig. 1) determines WLAN AP 106 (Fig. 1) is non-mobile and UE 102 (Fig. 1) is at the medium mobility state or the high mobility state, e.g., as described above.

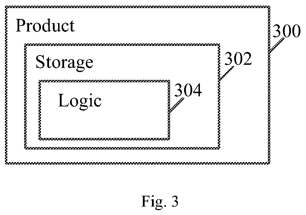

Reference is made to Fig. 3, which schematically illustrates a product of manufacture 300, in accordance with some demonstrative embodiments. Product 300 may include a non-transitory machine-readable storage medium 302 to store logic 304, which may be used, for example, to perform at least part of the functionality of UE 102 (Fig. 1), offload module 145 (Fig. 1), eNB 104 (Fig. 1), node B 196 (Fig. 1), and/or ANDSF server 162 (Fig. 1), and/or to perform one or more operations of the method of Fig. 2. The phrase "non-transitory machine-readable medium" is directed to include all computer-readable media, with the sole exception being a transitory propagating signal.

In some demonstrative embodiments, product 300 and/or machine-readable storage medium 302 may include one or more types of computer-readable storage media capable of storing data, including volatile memory, non-volatile memory, removable or non-removable memory, erasable or non-erasable memory, writeable or re-writeable memory, and the like. For example, machine-readable storage medium 302 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative embodiments, logic 304 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative embodiments, logic 304 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Matlab, Pascal, Visual BASIC, assembly language, machine code, and the like.

## Claims

1. A user equipment (102) comprising:
a Wireless Local Area Network, WLAN, transceiver (147) configured to communicate with a WLAN Access Point, AP (106);
a cellular transceiver (146) configured to communicate with a cellular network (119, 160); and
an offloading module (145) configured to determine whether or not the WLAN AP (106) is mobile, and to route traffic between the cellular network (119, 160) and the WLAN AP (106), based on whether or not the WLAN AP (106) is mobile and a mobility state of the user equipment (102);
**characterized in that**
said offloading module (145) is further configured to determine the WLAN AP (106) is mobile, if an identifier of the WLAN AP (106) is detected by the user equipment (102) for a predetermined time period, when the user equipment (102) is at a medium mobility state or a high mobility state.

2. The user equipment (102) of claim 1, wherein said offloading module (145) is further configured to determine whether or not the WLAN AP (106) is mobile based on one or more WLAN signal strength metrics corresponding to the WLAN AP (106), when the user equipment (102) is at a medium mobility state or a high mobility state.

3. The user equipment (102) of claim 2, wherein said offloading module (145) is configured to determine the WLAN AP (106) is mobile, if a change of the one or more WLAN signal strength metrics during a predefined period is less than a predefined threshold.

4. The user equipment (102) of claim 1, wherein said offloading module (145) is configured to determine whether or not the WLAN AP (106) is mobile based on a comparison between an identifier of the WLAN AP (106) and a list of mobile AP identifiers.

5. The user equipment (102) of any one of claims 1-4, wherein, if the offloading module (145) determines the WLAN AP (106) is mobile and the user equipment (102) is at a medium mobility state or a high mobility state, the offloading module (145) is configured to route the traffic between the cellular network (119, 160) and the WLAN AP (106), based on one or more access network selection and traffic steering rules using only WLAN metrics.

6. The user equipment (102) of any one of claims 1-4, wherein the offloading module (145) is configured to route the traffic between the cellular network (119, 160) and the WLAN AP (106), based on one or more access network selection and traffic steering rules,
wherein the offloading module (145) is further configured to evaluate the access network selection and traffic steering rules using one or more first assistance thresholds corresponding to one or more assistance parameters, if the offloading module (145) determines the WLAN AP (106) is mobile and the user equipment (102) is at a medium mobility state or a high mobility state,
wherein the offloading module (145) is further configured to evaluate the access network selection and traffic steering rules using one or more second assistance thresholds corresponding to said one or more assistance parameters, different from the first assistance thresholds, if the offloading module (145) determines the WLAN AP (106) is non-mobile.

7. The user equipment (102) of claim 6, wherein a second assistance threshold corresponding to an assistance parameter is higher than a first assistance threshold corresponding to the assistance parameter.

8. The user equipment (102) of any one of claims 1-4, wherein the offloading module (145) is configured to route the traffic between the cellular network (119, 160) and the WLAN AP (106), based on fulfillment of one or more access network selection and traffic steering rules during a steering timer period,
wherein the offloading module (145) is further configured to set the steering timer period to a first period, if the offloading module (145) determines the WLAN AP (106) is mobile and the user equipment (102) is at a medium mobility state or a high mobility state,
wherein the offloading module (145) is further configured to set the steering timer period to a second period, different from the first steering timer period, if the offloading module (145) determines the WLAN AP (106) is non-mobile and the user equipment (102) is at the medium mobility state or the high mobility state.

9. A method to be performed by a user equipment (102), the method comprising:
communicating with a cellular network (119, 160);
determining whether or not a Wireless Local Area Network, WLAN, Access Point, AP is mobile; and
routing traffic between the cellular network (119, 160) and the WLAN AP (106), based at least on whether or not the WLAN AP (106) is mobile and a mobility state of the user equipment (102);
**characterized in that**
wherein the user equipment (102) determines that the WLAN AP (106) is mobile, if an identifier of the WLAN AP (106) is detected by the user equipment (102) for a predetermined time period, when the user equipment (102) is at a medium mobility state or a high mobility state.

10. The method of claim 9 comprising, if determining the WLAN AP (106) is mobile and the user equipment (102) is at a medium mobility state or a high mobility state, routing the traffic between the cellular network (119, 160) and the WLAN AP (106), based on one or more access network selection and traffic steering rules using only WLAN metrics.

11. The method of claim 10 comprising routing the traffic flow between the cellular network (119, 160) and the WLAN AP (106), based on one or more access network selection and traffic steering rules;
evaluating the access network selection and traffic steering rules using one or more first assistance thresholds corresponding to one or more assistance parameters, if determining the WLAN AP (106) is mobile and the user equipment (102) is at a medium mobility state or a high mobility state; and
evaluating the access network selection and traffic steering rules using one or more second assistance thresholds corresponding to said one or more assistance parameters, different from the first assistance thresholds, if determining the WLAN AP (106) is non-mobile.

12. A product including one or more tangible computer-readable non-transitory storage media comprising computer-executable instructions operable to, when executed by at least one computer processor, enable the at least one computer processor to implement a method at a user equipment (102), the method comprising:
detecting a Wireless Local Area Network, WLAN, Access Point, AP, of a WLAN, when the user equipment (102) is at a medium mobility state or a high mobility state;
determining whether or not the WLAN AP (106) is mobile; and
selecting whether or not to steer traffic to the WLAN AP (106), based at least on whether or not the WLAN AP (106) is mobile and a mobility state of the user equipment (102);
**characterized in that**
wherein the user equipment (102) determines that the WLAN AP (106) is mobile, if an identifier of the WLAN AP (106) is detected by the user equipment (102) for a predetermined time period, when the user equipment (102) is at a medium mobility state or a high mobility state.

13. The product of claim 12, wherein the method comprises, if determining the WLAN AP (106) is mobile and the user equipment (102) is at the medium mobility state or the high mobility state, routing the traffic between the cellular network (119, 160) and the WLAN AP (106), based on one or more access network selection and traffic steering rules using only WLAN metrics.

14. The product of claim 12, wherein the method comprises routing the traffic between the cellular network (119, 160) and the WLAN AP (106), based on one or more access network selection and traffic steering rules;
evaluating the access network selection and traffic steering rules using one or more first assistance thresholds corresponding to one or more assistance parameters, if determining the WLAN AP (106) is mobile and the user equipment (102) is at the medium mobility state or the high mobility state; and
evaluating the access network selection and traffic steering rules using one or more second assistance thresholds corresponding to said one or more assistance parameters, different from the first assistance thresholds, if determining the WLAN AP (106) is non-mobile.

15. The product of claim 12, wherein the method comprises routing the traffic between the cellular network (119, 160) and the WLAN AP (106), based on fulfillment of one or more access network selection and traffic steering rules during a steering timer period; setting the steering timer period to a first period, if determining the WLAN AP (106) is mobile and the user equipment (102) is at the medium mobility state or the high mobility state; and setting the steering timer period to a second period, different from the first steering timer period, if determining the WLAN AP (106) is non-mobile and the user equipment (102) is at the medium mobility state or the high mobility state.

## Patentansprüche

1. Benutzerausrüstung (102) die Folgendes umfasst:
einen Wireless-Local-Area-Network, WLAN, -Transceiver (147), der dazu ausgelegt ist, mit einem WLAN-Access-Point, AP, (106) zu kommunizieren;
einen Mobilfunk-Transceiver (146), der dazu ausgelegt ist, mit einem Mobilfunknetzwerk (119, 160) zu kommunizieren; und
ein Entlademodul (145), das dazu ausgelegt ist, zu bestimmen, ob der WLAN-AP (106) mobil ist oder nicht, und Verkehr zwischen dem Mobilfunknetzwerk (119, 160) und dem WLAN-AP (106) zu leiten, basierend darauf, ob der WLAN-AP (106) mobil ist oder nicht und auf einem Mobilitätsstatus der Benutzerausrüstung (102);
**dadurch gekennzeichnet, dass**
das Entlademodul (145) ferner dazu ausgelegt ist, zu bestimmen, dass der WLAN-AP (106) mobil ist, wenn eine Kennung des WLAN-AP (106) durch die Benutzerausrüstung (102) für einen vorbestimmten Zeitraum erkannt wird, wenn die Benutzerausrüstung (102) in einem mittleren Mobilitätsstatus oder in einem hohen Mobilitätsstatus ist.

2. Benutzerausrüstung (102) nach Anspruch 1, wobei das Entlademodul (145) ferner dazu ausgelegt ist, zu bestimmen, ob der WLAN-AP (106) mobil ist oder nicht, basierend auf einer oder mehreren WLAN-Signalstärkemetriken, die dem WLAN-AP (106) entsprechen, wenn die Benutzerausrüstung (102) in einem mittleren Mobilitätsstatus oder in einem hohen Mobilitätsstatus ist.

3. Benutzerausrüstung (102) nach Anspruch 2, wobei das Entlademodul (145) dazu ausgelegt ist, zu bestimmen, dass der WLAN-AP (106) mobil ist, wenn eine Änderung der einen oder mehreren WLAN-Signalstärkemetriken während eines vordefinierten Zeitraums geringer ist als ein vordefinierter Schwellenwert.

4. Benutzerausrüstung (102) nach Anspruch 1, wobei das Entlademodul (145) dazu ausgelegt ist, zu bestimmen, ob der WLAN-AP (106) mobil ist oder nicht, basierend auf einem Vergleich zwischen einer Kennung des WLAN-AP (106) und einer Liste von mobilen AP-Kennungen.

5. Benutzerausrüstung (102) nach einem der Ansprüche 1-4, wobei, wenn das Entlademodul (145) bestimmt, dass der WLAN-AP (106) mobil ist und die Benutzerausrüstung (102) in einem mittleren Mobilitätsstatus oder in einem hohen Mobilitätsstatus ist, das Entlademodul (145) dazu ausgelegt ist, den Verkehr zwischen dem Mobilfunknetzwerk (119, 160) und dem WLAN-AP (106) zu leiten, basierend auf einer oder mehreren Zugangsnetzwerkauswahl- und Verkehrssteuerungsregeln durch Verwenden nur von WLAN-Metriken.

6. Benutzerausrüstung (102) nach einem der Ansprüche 1-4, wobei das Entlademodul (145) dazu ausgelegt ist, den Verkehr zwischen dem Mobilfunknetzwerk (119, 160) und dem WLAN-AP (106) zu leiten, basierend auf einer oder mehreren Zugangsnetzwerkauswahl- und Verkehrssteuerungsregeln,
wobei das Entlademodul (145) ferner dazu ausgelegt ist, die Zugangsnetzwerkauswahl- und Verkehrssteuerungsregeln durch Verwenden eines oder mehrerer erster Unterstützungsschwellenwerte zu beurteilen, die einem oder mehreren Unterstützungsparametern entsprechen, wenn das Entlademodul (145) bestimmt, dass der WLAN-AP (106) mobil ist und die Benutzerausrüstung (102) in einem mittleren Mobilitätsstatus oder in einem hohen Mobilitätsstatus ist,
wobei das Entlademodul (145) ferner dazu ausgelegt ist, die Zugangsnetzwerkauswahl- und Verkehrssteuerungsregeln durch Verwenden eines oder mehrerer zweiter Unterstützungsschwellenwerte zu beurteilen, die dem einen oder den mehreren Unterstützungsparametern entsprechen, die sich von den ersten Unterstützungsschwellenwerten unterscheiden, wenn das Entlademodul (145) bestimmt, dass der WLAN-AP (106) nicht mobil ist.

7. Benutzerausrüstung (102) nach Anspruch 6, wobei ein zweiter Unterstützungsschwellenwert, der einem Unterstützungsparameter entspricht, höher ist als ein erster Unterstützungsschwellenwert, der dem Unterstützungsparameter entspricht.

8. Benutzerausrüstung (102) nach einem der Ansprüche 1-4, wobei das Entlademodul (145) dazu ausgelegt ist, den Verkehr zwischen dem Mobilfunknetzwerk (119, 160) und dem WLAN-AP (106) zu leiten, basierend auf der Erfüllung einer oder mehrerer Zugangsnetzwerkauswahl- und Verkehrssteuerungsregeln während eines Steuerungszeitraums,
wobei das Entlademodul (145) ferner dazu ausgelegt ist, den Steuerungszeitraum auf einen ersten Zeitraum einzustellen, wenn das Entlademodul (145) bestimmt, dass der WLAN-AP (106) mobil ist und die Benutzerausrüstung (102) in einem mittleren Mobilitätsstatus oder in einem hohen Mobilitätsstatus ist,
wobei das Entlademodul (145) ferner dazu ausgelegt ist, den Steuerungszeitraum auf einen zweiten Zeitraum einzustellen, der sich von dem ersten Steuerungszeitraum unterscheidet, wenn das Entlademodul (145) bestimmt, dass der WLAN-AP (106) nicht mobil ist und die Benutzerausrüstung (102) in dem mittleren Mobilitätsstatus oder in dem hohen Mobilitätsstatus ist.

9. Verfahren, das durch eine Benutzerausrüstung (102) ausgeführt werden soll, wobei das Verfahren Folgendes umfasst:
Kommunizieren mit einem Mobilfunknetzwerk (119, 160);
Bestimmen, ob ein Wireless-Local-Area-Network, WLAN, - Access Point, AP, mobil ist oder nicht; und
Leiten von Verkehr zwischen dem Mobilfunknetzwerk (119, 160) und dem WLAN-AP (106), basierend mindestens darauf, ob der WLAN-AP (106) mobil ist oder nicht, und auf einem Mobilitätsstatus der Benutzerausrüstung (102);
**dadurch gekennzeichnet, dass**
die Benutzerausrüstung (102) bestimmt, dass der WLAN-AP (106) mobil ist, wenn eine Kennung des WLAN-AP (106) durch die Benutzerausrüstung (102) für einen vorbestimmten Zeitraum erkannt wird, wenn die Benutzerausrüstung (102) in einem mittleren Mobilitätsstatus oder in einem hohen Mobilitätsstatus ist.

10. Verfahren nach Anspruch 9, das, wenn bestimmt wird, dass der WLAN-AP (106) mobil ist und die Benutzerausrüstung (102) in einem mittleren Mobilitätsstatus oder in einem hohen Mobilitätsstatus ist, das Leiten des Verkehrs zwischen dem Mobilfunknetzwerk (119, 160) und dem WLAN-AP (106) umfasst, basierend auf einer oder mehreren Zugangsnetzwerkauswahl- und Verkehrssteuerungsregeln durch Verwenden nur von WLAN-Metriken.

11. Verfahren nach Anspruch 10, das Folgendes umfasst:
Leiten des Verkehrsflusses zwischen dem Mobilfunknetzwerk (119, 160) und dem WLAN-AP (106), basierend auf einer oder mehreren Zugangsnetzwerkauswahl- und Verkehrssteuerungsregeln;
Beurteilen der Zugangsnetzwerkauswahl- und Verkehrssteuerungsregeln durch Verwenden eines oder mehrerer erster Unterstützungsschwellenwerte, die einem oder mehreren Unterstützungsparametern entsprechen, wenn bestimmt wird, dass der WLAN-AP (106) mobil ist und die Benutzerausrüstung (102) in einem mittleren Mobilitätsstatus oder in einem hohen Mobilitätsstatus ist; und
Beurteilen der Zugangsnetzwerkauswahl- und Verkehrssteuerungsregeln durch Verwenden eines oder mehrerer zweiter Unterstützungsschwellenwerte, die dem einen oder den mehreren Unterstützungsparametern entsprechen, die sich von den ersten Unterstützungsschwellenwerten unterscheiden, wenn bestimmt wird, dass der WLAN-AP (106) nicht mobil ist.

12. Produkt, das ein oder mehrere materielle computerlesbare nicht flüchtige Speicherungsmedien beinhaltet, die computerausführbare Anweisungen umfassen, die, wenn durch mindestens einen Computerprozessor ausgeführt, funktionsfähig sind, es dem mindestens einen Computerprozessor zu ermöglichen, ein Verfahren an einer Benutzerausrüstung (102) zu implementieren, wobei das Verfahren Folgendes umfasst:
Erkennen eines Wireless-Local-Area-Network, WLAN, - Access-Point, AP, eines WLAN, wenn die Benutzerausrüstung (102) in einem mittleren Mobilitätsstatus oder in einem hohen Mobilitätsstatus ist;
Bestimmen, ob der WLAN-AP (106) mobil ist oder nicht; und
Auswählen, ob Verkehr zu dem WLAN-AP (106) geleitet wird oder nicht, basierend mindestens darauf, ob der WLAN-AP (106) mobil ist oder nicht, und auf einem Mobilitätsstatus der Benutzerausrüstung (102);
**dadurch gekennzeichnet, dass**
die Benutzerausrüstung (102) bestimmt, dass der WLAN-AP (106) mobil ist, wenn eine Kennung des WLAN-AP (106) durch die Benutzerausrüstung (102) für einen vorbestimmten Zeitraum erkannt wird, wenn die Benutzerausrüstung (102) in einem mittleren Mobilitätsstatus oder in einem hohen Mobilitätsstatus ist.

13. Produkt nach Anspruch 12, wobei das Verfahren, wenn bestimmt wird, dass der WLAN-AP (106) mobil ist und die Benutzerausrüstung (102) in dem mittleren Mobilitätsstatus oder in dem hohen Mobilitätsstatus ist, das Leiten des Verkehrs zwischen dem Mobilfunknetzwerk (119, 160) und dem WLAN-AP (106) umfasst, basierend auf einer oder mehreren Zugangsnetzwerkauswahl- und Verkehrssteuerungsregeln durch Verwenden nur von WLAN-Metriken.

14. Produkt nach Anspruch 12, wobei das Verfahren Folgendes umfasst: Leiten des Verkehrs zwischen dem Mobilfunknetzwerk (119, 160) und dem WLAN-AP (106), basierend auf einer oder mehreren Zugangsnetzwerkauswahl- und Verkehrssteuerungsregeln; Beurteilen der Zugangsnetzwerkauswahl- und Verkehrssteuerungsregeln durch Verwenden eines oder mehrerer erster Unterstützungsschwellenwerte, die einem oder mehreren Unterstützungsparametern entsprechen, wenn bestimmt wird, dass der WLAN-AP (106) mobil ist und die Benutzerausrüstung (102) in dem mittleren Mobilitätsstatus oder in dem hohen Mobilitätsstatus ist; und
Beurteilen der Zugangsnetzwerkauswahl- und Verkehrssteuerungsregeln durch Verwenden eines oder mehrerer zweiter Unterstützungsschwellenwerte, die dem einen oder den mehreren Unterstützungsparametern entsprechen, die sich von den ersten Unterstützungsschwellenwerten unterscheiden, wenn bestimmt wird, dass der WLAN-AP (106) nicht mobil ist.

15. Produkt nach Anspruch 12, wobei das Verfahren Folgendes umfasst: Leiten des Verkehrs zwischen dem Mobilfunknetzwerk (119, 160) und dem WLAN-AP (106), basierend auf der Erfüllung einer oder mehrerer Zugangsnetzwerkauswahl- und Verkehrssteuerungsregeln während eines Steuerungszeitraums; Einstellen des Steuerungszeitraums auf einen ersten Zeitraum, wenn bestimmt wird, dass der WLAN-AP (106) mobil ist und die Benutzerausrüstung (102) in dem mittleren Mobilitätsstatus oder in dem hohen Mobilitätsstatus ist; und Einstellen des Steuerungszeitraums auf einen zweiten Zeitraum, der sich von dem ersten Steuerungszeitraum unterscheidet, wenn bestimmt wird, dass der WLAN-AP (106) nicht mobil ist und die Benutzerausrüstung (102) in dem mittleren Mobilitätsstatus oder in dem hohen Mobilitätsstatus ist.

## Revendications

1. Equipement utilisateur (102) comprenant :
un émetteur-récepteur de réseau local sans fil, WLAN, (147) configuré pour communiquer avec un point d'accès, AP, de WLAN (106) ;
un émetteur-récepteur cellulaire (146) configuré pour communiquer avec un réseau cellulaire (119, 160) ; et
un module de délestage (145) configuré pour déterminer que l'AP de WLAN (106) est mobile ou non, et router le trafic entre le réseau cellulaire (119, 160) et l'AP de WLAN (106), selon que l'AP de WLAN (106) est mobile ou non et sur la base d'un état de mobilité de l'équipement utilisateur (102) ;
**caractérisé en ce que**
ledit module de délestage (145) est configuré en outre pour déterminer que l'AP de WLAN (106) est mobile, si l'équipement utilisateur (102) détecte un identifiant de l'AP de WLAN (106) pendant une période de temps prédéterminée, quand l'équipement utilisateur (102) est dans un état de mobilité moyenne ou un état de grande mobilité.

2. Equipement utilisateur (102) selon la revendication 1, dans lequel ledit module de délestage (145) est configuré en outre pour déterminer que l'AP de WLAN (106) est mobile ou non sur la base d'une ou plusieurs métriques de force de signal de WLAN correspondant à l'AP de WLAN (106), quand l'équipement utilisateur (102) est dans un état de mobilité moyenne ou dans un état de grande mobilité.

3. Equipement utilisateur (102) selon la revendication 2, dans lequel ledit module de délestage (145) est configuré pour déterminer que l'AP de WLAN (106) est mobile, si un changement des une ou plusieurs métriques de force de signal de WLAN durant une période prédéfinie est inférieur à un seuil prédéfini.

4. Equipement utilisateur (102) selon la revendication 1, dans lequel ledit module de délestage (145) est configuré pour déterminer que l'AP de WLAN (106) est mobile ou non sur la base d'une comparaison entre un identifiant de l'AP de WLAN (106) et d'une liste d'identifiants d'AP mobiles.

5. Equipement utilisateur (102) selon l'une quelconque des revendications 1 à 4, dans lequel, si le module de délestage (145) détermine que l'AP de WLAN (106) est mobile et l'équipement utilisateur (102) est dans un état de mobilité moyenne ou un état de grande mobilité, le module de délestage (145) est configuré pour router le trafic entre le réseau cellulaire (119, 160) et l'AP de WLAN (106), sur la base d'une ou plusieurs règles de sélection de réseau d'accès et d'orientation de trafic à l'aide uniquement de métriques de WLAN.

6. Equipement utilisateur (102) selon l'une quelconque des revendications 1 à 4, dans lequel le module de délestage (145) est configuré pour router le trafic entre le réseau cellulaire (119, 160) et l'AP de WLAN (106), sur la base d'une ou plusieurs règles de sélection de trafic et d'orientation de trafic,
dans lequel le module de délestage (145) est configuré en outre pour évaluer les règles de sélection de trafic et d'orientation de trafic à l'aide d'un ou plusieurs premiers seuils d'assistance correspondant à un ou plusieurs paramètres d'assistance, si le module de délestage (145) détermine que l'AP de WLAN (106) est mobile et que l'équipement utilisateur (102) est dans un état de mobilité moyenne ou un état de grande mobilité,
dans lequel le module de délestage (145) est configuré en outre pour évaluer les règles de sélection de trafic et d'orientation de trafic à l'aide d'un ou plusieurs seconds seuils d'assistance correspondant auxdits un ou plusieurs paramètres d'assistance, différents des premiers seuils d'assistance, si le module de délestage (145) détermine que l'AP de WLAN (106) n'est pas mobile.

7. Equipement utilisateur (102) selon la revendication 6, dans lequel un second seuil d'assistance correspondant à un paramètre d'assistance est supérieur à un premier seuil d'assistance correspondant au paramètre d'assistance.

8. Equipement utilisateur (102) selon l'une quelconque des revendications 1 à 4, dans lequel le module de délestage (145) est configuré pour router le trafic entre le réseau cellulaire (119, 160) et l'AP de WLAN (106), quand une ou plusieurs règles de sélection de réseau d'accès et d'orientation de trafic sont satisfaites durant une période d'orientation,
dans lequel le module de délestage (145) est configuré en outre pour régler la période d'orientation à une première période, si le module de délestage (145) détermine que l'AP de WLAN (106) est mobile et que l'équipement utilisateur (102) est dans un état de mobilité moyenne ou un état de grande mobilité,
dans lequel le module de délestage (145) est configuré en outre pour régler la période d'orientation à une seconde période, différente de la première période d'orientation, si le module de délestage (145) détermine que l'AP de WLAN (106) n'est pas mobile et que l'équipement utilisateur (102) est dans l'état de mobilité moyenne ou l'état de grande mobilité.

9. Procédé destiné à être réalisé par un équipement utilisateur (102), le procédé comprenant :
la communication avec le réseau cellulaire (119, 160) ;
la détermination qu'un point d'accès, AP, de réseau local sans fil, WLAN, est mobile ou non ; et
le routage d'un trafic entre le réseau cellulaire (119, 160) et l'AP de WLAN (106), selon que l'AP de WLAN (106) est mobile ou non et sur la base d'un état de mobilité de l'équipement utilisateur (102) ;
**caractérisé en ce que**
dans lequel l'équipement utilisateur (102) détermine que l'AP de WLAN (106) est mobile, si l'équipement utilisateur (102) détecte un identifiant de l'AP de WLAN (106) pendant une période de temps prédéterminée, quand l'équipement utilisateur (102) est dans un état de mobilité moyenne ou un état de grande mobilité.

10. Procédé selon la revendication 9 comprenant, s'il est déterminé que l'AP de WLAN (106) est mobile et que l'équipement utilisateur (102) est dans un état de mobilité moyenne ou un état de grande mobilité, le routage du trafic entre le réseau cellulaire (119, 160) et l'AP de WLAN (106), sur la base d'une ou plusieurs règles de sélection de trafic et d'orientation de trafic à l'aide uniquement de métriques de WLAN.

11. Procédé selon la revendication 10 comprenant le routage du flux de trafic entre le réseau cellulaire (119, 160) et l'AP de WLAN (106), sur la base d'une ou plusieurs règles de sélection de trafic et d'orientation de trafic ;
l'évaluation des règles de sélection de trafic et d'orientation de trafic à l'aide d'un ou plusieurs premiers seuils d'assistance correspondant à un ou plusieurs paramètres d'assistance, s'il est déterminé que l'AP de WLAN (106) est mobile et que l'équipement utilisateur (102) est dans un état de mobilité moyenne ou un état de grande mobilité ; et
l'évaluation des règles de sélection de trafic et d'orientation de trafic à l'aide d'un ou plusieurs seconds seuils d'assistance correspondant auxdits un ou plusieurs paramètres d'assistance, différents des premiers seuils d'assistance, s'il est déterminé que l'AP de WLAN (106) n'est pas mobile.

12. Produit comportant un ou plusieurs supports de mémorisation non transitoires, tangibles, lisibles par ordinateur, comprenant des instructions exécutables par ordinateur exploitables pour, à leur exécution par au moins un processeur informatique, permettre à l'au moins un processeur informatique de mettre en œuvre un procédé au niveau d'un équipement utilisateur (102), le procédé comprenant :
la détection d'un point d'accès, AP, d'un réseau local sans fil, WLAN, quand l'équipement utilisateur (102) est dans un état de mobilité moyenne ou un état de grande mobilité ;
la détermination que l'AP de WLAN (106) est mobile ou non ; et
la sélection qu'il convient ou non d'orienter le trafic vers l'AP de WLAN (106), selon que l'AP de WLAN (106) est mobile et sur la base d'un état de mobilité de l'équipement utilisateur (102) ;
**caractérisé en ce que**
dans lequel l'équipement utilisateur (102) détermine que l'AP de WLAN (106) est mobile, si l'équipement utilisateur (102) détecte un identifiant de l'AP de WLAN (106) pendant une période de temps prédéterminée, quand l'équipement utilisateur (102) est dans un état de mobilité moyenne ou un état de grande mobilité.

13. Produit selon la revendication 12, dans lequel le procédé comprend, s'il est déterminé que l'AP de WLAN (106) est mobile et que l'équipement utilisateur (102) est dans l'état de mobilité moyenne ou l'état de grande mobilité, le routage du trafic entre le réseau cellulaire (119, 160) et l'AP de WLAN (106), sur la base d'une ou plusieurs règles de sélection de trafic et d'orientation de trafic à l'aide uniquement de métriques de WLAN.

14. Produit selon la revendication 12, dans lequel le procédé comprend le routage du flux de trafic entre le réseau cellulaire (119, 160) et l'AP de WLAN (106), sur la base d'une ou plusieurs règles de sélection de trafic et d'orientation de trafic ;
l'évaluation des règles de sélection de trafic et d'orientation de trafic à l'aide d'un ou plusieurs premiers seuils d'assistance correspondant à un ou plusieurs paramètres d'assistance, s'il est déterminé que l'AP de WLAN (106) est mobile et que l'équipement utilisateur (102) est dans un état de mobilité moyenne ou un état de grande mobilité ; et
l'évaluation des règles de sélection de trafic et d'orientation de trafic à l'aide d'un ou plusieurs seconds seuils d'assistance correspondant auxdits un ou plusieurs paramètres d'assistance, différents des premiers seuils d'assistance, s'il est déterminé que l'AP de WLAN (106) n'est pas mobile.

15. Produit selon la revendication 12, dans lequel le procédé comprend le routage du trafic entre le réseau cellulaire (119, 160) et l'AP de WLAN (106), quand une ou plusieurs règles de sélection de trafic et d'orientation de trafic sont satisfaites durant une période d'orientation ; le réglage de la période d'orientation à une première période, s'il est déterminé que l'AP de WLAN (106) est mobile et que l'équipement utilisateur (102) est dans l'état de mobilité moyenne ou l'état de grande mobilité ; et le réglage de la période d'orientation à une seconde période, différente de la première période d'orientation, s'il est déterminé que l'AP de WLAN (106) n'est pas mobile et que l'équipement utilisateur (102) est dans l'état de mobilité moyenne ou l'état de grande mobilité.
